# EUROPÄISCHE PATENTSCHRIFT

(11) **EP 2 195 562 B1**
(45) Veröffentlichungstag und Bekanntmachung des Hinweises auf die Patenterteilung: **14.12.2011**
(21) Anmeldenummer: 08803055.6
(22) Anmeldetag: 15.08.2008
(51) Int. Cl.: F16H 61/421

(54) **VERSTELLVORRICHTUNG DES HUBVOLUMENS VON HYDRAULISCHEN KOLBENMASCHINEN**
DEVICE FOR ADJUSTING THE STROKE VOLUME OF HYDRAULIC PISTON MACHINES
DISPOSITIF DE RÉGLAGE DE LA CYLINDRÉE DE MOTEURS À PISTONS HYDRAULIQUES

(30) Priorität: 02.10.2007 DE 102007047193
(43) Veröffentlichungstag der Anmeldung: 16.06.2010
(73) Patentinhaber: ZF Friedrichshafen AG, 88038 Friedrichshafen (DE)
(72) Erfinder: LEGNER, Jürgen, 88048 Friedrichshafen (DE)
(86) Internationale Anmeldenummer: PCT/EP2008/060763
(87) Internationale Veröffentlichungsnummer: WO 2009/047041

(56) Entgegenhaltungen:
- DE-B- 1 069 978
- US-A- 3 163 987
- US-A- 3 601 981
- US-A- 5 524 437

## Beschreibung

Die Erfindung bezieht sich auf eine Verstellvorrichtung des Hubvolumens von hydraulischen Kolbenmaschinen nach der im Oberbegriff von Anspruch 1 näher definierten Art.

Hydraulische Kolbenmaschinen werden beispielsweise bei hydrostatisch-mechanischen Leistungsverzweigungsgetrieben für den hydraulischen Leistungszweig verwendet, um die Übersetzung des Getriebes stufenlos zu verändern. Hierzu benötigen die hydraulischen Kolbenmaschinen Verstellvorrichtungen, mittels welcher das Hubvolumen der Kolbenmaschinen verstellt werden kann.

Die DE 42 06 023 A1 offenbart ein stufenloses hydrostatischmechanisches Leistungsverzweigungsgetriebe mit hydraulischen Kolbenmaschinen und Verstellvorrichtungen, mittels welcher die Kolbenmaschinen stufenlos verstellt werden können. Die Verstellvorrichtung umfaßt Steuerorgane, mittels welcher die Kolbenmaschinen angesteuert werden können. Um das System vor Überlastung zu schützen, weist die Verstellvorrichtung ein Hochdruckbegrenzungsventil auf, mittels welchem der maximale Druck begrenzt werden kann. Bei Aktivierung des Hochdruckbegrenzungsventils wird die Energie in Wärme umgewandelt, welche über einen Kühler abgegeben werden muß.

Die US 3 601 981 A offenbart eine Verstellvorrichtung nach dem Oberbegriff des Hauptanspruchs.

Der vorliegenden Erfindung liegt die Aufgabe zugrunde, eine Verstellvorrichtung des Hubvolumens von hydraulischen Kolbenmaschinen zu schaffen, welche einfach aufgebaut ist und das System vor Überhitzung schützt.

Die Aufgabe wird mit einer, auch die kennzeichnenden Merkmale des Hauptanspruchs aufweisende, gattungsgemäßen Verstellvorrichtung gelöst.

Die Verstellvorrichtung weist eine erste und eine zweite Kolbenmaschine auf, wobei die Kolbenmaschinen in Schrägachsen-Bauart ausgeführt sind. Kolbenmaschinen in Schrägachsen-Bauart zeichnen sich durch sehr gute Wirkungsgrade aus. Die beiden Kolbenmaschinen sind benachbart zueinander angeordnet und weisen ein gemeinsames Bauteil, ein sogenanntes Joch, auf, mittels welchem die beiden Kolbenmaschinen in ihrem Hubvolumen gemeinsam verstellt werden können. Die Kolbenmaschinen weisen Arbeitsleitungen auf, über welche die beiden Kolbenmaschinen miteinander verbunden sind. Dadurch bilden die Kolbenmaschinen einen sogenannten geschlossenen Kreislauf. Das gemeinsame Bauteil zum Verstellen des Hubvolumens der Kolbenmaschinen ist so angeordnet, dass in einer ersten Stellung des gemeinsamen Bauteils die erste hydraulische Kolbenmaschine auf ein kleines oder kein Hubvolumen und die zweite hydraulische Kolbenmaschine auf ein großes oder maximales Hubvolumen verstellt ist. Die erste hydraulische Kolbenmaschine arbeitet beispielsweise als Pumpe und fördert Druckmittel zur zweiten Kolbenmaschine, welche in diesem Betriebszustand als Motor arbeitet. *Im anderen Betriebszustand arbeitet die zweite Kolbenmaschine als Pumpe und die erste Kolbenmaschine als Motor. Verstellt man das gemeinsame Bauteil aus seiner ersten Stellung in Richtung zweite Stellung, so vergrößert sich das Hubvolumen der ersten Kolbenmaschine, beispielsweise der Pumpe, und das Hubvolumen der zweiten Kolbenmaschine, beispielsweise des Motors, wird gleichzeitig verkleinert. Beim Betrieb in der zweiten Stellung des gemeinsamen Bauteils weist die erste Kolbenmaschine ihr maximales Hubvolumen auf und fördert beim Betrieb als Pumpe somit einen maximalen Volumenstrom, und die zweite Kolbenmaschine weist ihr minimales Hubvolumen auf und erzeugt somit beim Betrieb als Motor eine hohe Abtriebsdrehzahl. Das gemeinsame Bauteil läßt sich durch Mittel zum Verstellen, wie beispielsweise einem hydraulischen Zylinder, von einer ersten Stellung in Richtung zweite Stellung oder von einer zweiten Stellung in Richtung erste Stellung verstellen. Dadurch kann beispielsweise ein Fahrer eines Fahrzeugs über eine Einrichtung zur manuellen Vorgabe, beispielsweise über ein Fahrpedal, welches mechanisch oder elektrisch ein Ventil ansteuert, den Fahrerwunsch an die Mittel zum Verstellen des gemeinsamen Bauteils weitergeben, wodurch das gemeinsame Bauteil in Abhängigkeit des Fahrerwunsches, und somit der Betätigung der Einrichtung zur manuellen Vorgabe, verstellt wird. Möchte der Fahrer eine höhere Abtriebsdrehzahl in der zweiten Kolbenmaschine, so wird das gemeinsame Bauteil in Richtung zweiter Stellung verstellt. Möchte der Fahrer eine geringere Abtriebsdrehzahl, so wird das gemeinsame Bauteil in Richtung erster Stellung verstellt. Steigt der Fahrwiderstand, so besteht die Möglichkeit, dass ein zulässiger Druck in den Arbeitsleitungen zwischen der ersten und zweiten Kolbenmaschine überschritten wird.

Erfindungsgemäß wird das gemeinsame Bauteil bei Überschreiten eines zuvor definierten Druckniveaus in Richtung erster Stellung verstellt, wodurch die erste Kolbenmaschine, beispielsweise die Pumpe, in Richtung kleineres Hubvolumen verstellt wird, und die zweite Kolbenmaschine, beispielsweise der Motor, in Richtung größeres Hubvolumen verstellt wird, wodurch der Druck in den Arbeitsleitungen sinkt. Dieses zuvor definierte Druckniveau liegt unterhalb eines maximal zulässigen Druckniveaus, bei welchem Hochdruckbegrenzungsventile öffnen, wodurch eine Überhitzung des Systems verhindert wird, da die Energie nicht über die Hochdruckbegrenzungsventile in Wärme umgewandelt wird.

In einer weiteren Ausgestaltungsform der Erfindung besteht die Möglichkeit, über eine weitere Einrichtung zur manuellen Vorgabe eine weitere Vorgabe dem aktuellen Druckniveau in den Arbeitsleitungen zu überlagern, wodurch das gemeinsame Bauteil schon bei einem geringeren Druckniveau in Richtung erster Stellung verstellt wird. Dadurch ist es möglich, den maximal zulässigen Druck stufenlos zu beeinflussen. Bei Verwendung eines doppelt wirkenden hydraulischen Zylinders, welcher über Hochdruck auf der Stangenseite des Zylinders in seiner Ausgangsposition verstellt wird und in dieser Ausgangsposition mit dem gemeinsamen Bauteil in seiner ersten Stellung verbunden ist, besteht die Möglichkeit, durch Druckbeaufschlagung dieses hydraulischen Zylinders auf der Bodenseite mit Druck einer Druckmittelquelle das gemeinsame Bauteil von der ersten Stellung in Richtung zweite Stellung zu bewegen. Beim Verbinden des hydraulischen Zylinders mit einem Druckmittelreservoir bewegt sich das gemeinsame Bauteil in Richtung erster Stellung zurück. Die Einrichtung zur manuellen Vorgabe kann aus einem weiteren Ventil bestehen, welches den Druckmittelzylinder mit der Druckmittelquelle oder mit dem Druckmittelreservoir, je nach Fahrerwunsch, verbindet, und so die Stellung des gemeinsamen Bauteils bestimmt, wodurch die Abtriebsdrehzahl der Kolbenmaschine festgelegt wird. Zwischen diesem weiteren Ventil und dem hydraulischen Zylinder ist ein Ventil angeordnet, welches in seiner Grundstellung das Druckmittel, kommend von dem weiteren Ventil, mit dem hydraulischen Zylinder verbindet und in seiner weiteren Stellung das Druckmittel, kommend vom weiteren Ventil, absperrt und den hydraulischen Zylinder mit dem Druckmittelreservoir verbindet. Die weitere Stellung wird angesteuert, wenn in den Arbeitsleitungen ein Druckniveau oberhalb eines definierten Druckniveaus auftritt.

Somit ist es möglich, über das weitere Ventil das gemeinsame Bauteil im Sinne einer Drehzahlsteuerung anzusteuern und über das Ventil, welches zwischen dem hydraulischen Zylinder und dem weiteren Ventil angeordnet ist, eine Begrenzung des Druckniveaus durch Verstellung des gemeinsamen Bauteils in Richtung erste Stellung herbeizuführen.

Durch die Beaufschlagung des Zylinders mit Hochdruck ist es möglich, ohne Verwendung eines Zylinders mit sehr großen Flächen große Verstellkräfte auf das gemeinsame Bauteil zu erzeugen.

Weitere Merkmale sind der Figuren-Beschreibung zu entnehmen.

Es zeigen:
- Fig. 1: ein Hydraulikschema der Verstellvorrichtung und

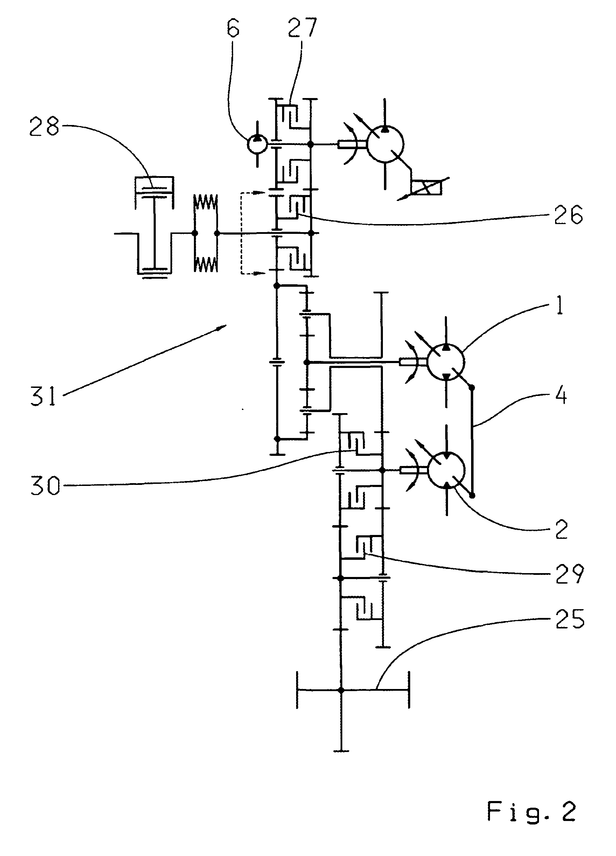

- Fig. 2: ein Getriebeschema eines hydrostatisch-mechanischen Leistungsverzweigungsgetriebes.

### Fig. 1:

Die Verstellvorrichtung weist eine erste Kolbenmaschine 1 in Schrägachsen-Bauart, welche in einem Betriebszustand, beispielsweise als Pumpe, arbeitet, und eine zweite Kolbenmaschine 2 in Schrägachsen-Bauart auf, welche in einem Betriebszustand, beispielsweise als Motor, arbeitet. Die erste Kolbenmaschine 1 und die zweite Kolbenmaschine 2 sind über Arbeitsleitungen 3 miteinander verbunden. Das Hubvolumen der ersten Kolbenmaschine 1 und der zweiten Kolbenmaschine 2 wird über ein gemeinsames Bauteil 4 verstellt. Ein doppelt wirkender hydraulischer Zylinder 5 ist mit dem gemeinsamen Bauteil 4 verbunden. Im nur stangenseitig druckbeaufschlagten Zustand des hydraulischen Zylinders 5 ist die erste Kolbenmaschine auf kein Hubvolumen verstellt, d. h., wird die erste Kolbenmaschine 1 angetrieben, so fördert sie kein Druckmittel. Die zweite Kolbenmaschine 2 ist im nur stangenseitig druckbeaufschlagten Zustand des hydraulischen Zylinders 5 auf maximales Hubvolumen verstellt. Eine Druckmittelquelle 6 fördert Druckmittel aus einem Druckmittelreservoir 7 in die Leitung 8. Soll das gemeinsame Bauteil 4 aus seiner ersten Stellung bei bodenseitig drucklosem, hydraulischen Zylinder 5 in Richtung zweite Stellung verstellt werden, so wird das Ventil 9 der Einrichtung zur manuellen Vorgabe 10 so umgesteuert, dass Druckmittel von der Leitung 8 in die Leitung 11 fließt. Befindet sich das Ventil 12 in seiner Grundstellung, so gelangt das Druckmittel von der Leitung 32 über die Leitung 13 in den hydraulischen Zylinder 5 auf dessen Bodenseite 33 und verstellt das gemeinsame Bauteil 4 in Richtung zweite Stellung, wodurch das Hubvolumen der ersten Kolbenmaschine 1 sich vergrößert, das Hubvolumen der zweiten Kolbenmaschine 1 sich verringert und Druckmittel über die Arbeitsleitungen 3 von der ersten Kolbenmaschine 1 zur zweiten Kolbenmaschine 2 gefördert wird. Das Ventil 12 wird über die einstellbare Feder 14 in seiner Grundstellung gehalten, wobei der höhere Druck in den Arbeitsleitungen 3 über das Wechselventil 15 über die Leitung 16 zur Kreisringfläche 17 gelangt. Die Kreisringfläche 17 ist mit der Feder 14 so ausgelegt, dass unterhalb dem Öffnungsniveau der Druckbegrenzungsventile 18 das Ventil 12 in seine zweite Position umgesteuert wird, wodurch das Druckmittel der Leitung 13 nicht mehr in den hydraulischen Zylinder 5 gelangt und die Bodenseite 33 des hydraulischen Zylinders 5 mit dem Druckmittelreservoir 7 verbunden wird, wodurch das gemeinsame Bauteil 4 in Richtung erste Stellung verstellt wird, wodurch der Druck in den Arbeitsleitungen 3 wieder sinkt. Indem das Ventil 12 unterhalb des Druckniveaus der Druckbegrenzungsventile 18 umgesteuert wird, bleiben die Druckbegrenzungsventile 18 geschlossen, wodurch der Antrieb vor Überhitzung geschützt bleibt. Fällt der Druck in den Arbeitsleitungen 3 wieder, so wird das Ventil 12 wieder in seine Ausgangsposition zurückgesteuert, und das Druckmittel der Leitung 13 erreicht wieder den hydraulischen Zylinder 5. Das Ventil 12 weist eine Kreisfläche 19 auf, welche mit der Leitung 20 in Verbindung steht. Über das Ventil 21 der weiteren Einrichtung zur manuellen Vorgabe 22 gelangt beim Aktivieren des Ventils 21 Druckmittel aus der Leitung 8 über die Leitung 20 auf die Kreisfläche 19. Dieser Druck, welcher auf die Kreisfläche 19 wirkt, erzeugt eine Kraft auf die Feder 14 des Ventils 12, welcher zur Kraft, resultierend aus dem Druck der Leitung 16, welcher auf die Kreisringfläche 17 wirkt, summiert wird. Dadurch kann der Druck der Leitung 8 dem Druck der Leitung 16 überlagert werden, wodurch der Umschaltpunkt des Ventils 12 stufenlos, und somit in Abhängigkeit der weiteren Einrichtung zur manuellen Vorgabe 22, eingestellt werden kann. Vorzugsweise ist das Flächenverhältnis zwischen der Kreisfläche 19 und der Kreisringfläche 17 3 : 100, wodurch sich bei einem maximalen Steuerdruck von beispielsweise 16 bar eine Kraft auf das Ventil 12 erzeugen läßt, welche einem Druck von 533 bar auf der Kreisringfläche 17 entsprechen wird. Durch diese stufenlose Begrenzung des Hochdrucks kann bei Verwendung der Verstelleinrichtung in einem Mobil-Fahrzeug eine stufenlose Zugkrafteinstellung geschaffen werden. Durch die Einrichtung zur manuellen Vorgabe 10 kann eine stufenlose Geschwindigkeitseinstellung geschaffen werden. Kombiniert man die stufenlose Geschwindigkeitseinstellung mit der stufenlosen Zugkrafteinstellung, so läßt sich eine stufenlose Leistungsregelung des Fahrzeugs verwirklichen. Die Druckmittelquelle 6 versorgt neben der Verstelleinrichtung bei Verwendung der Verstelleinrichtung in einem Getriebe Betätigungseinrichtungen 23 und Kupplungen 24.

Der Zylinder 5 ist an seiner Stangenseite 34 mit der Leitung 16 verbunden, wodurch der Zylinder 5 mit Hochdruck in seine Ausgangstellung verstellbar ist, wenn die Kraft aus dem Druck auf der Stangenseite 34 der Kraft aus dem Druck auf der Bodenseite 33 überwiegt.
Die Leitung 32 ist über ein Ventil 35 mit der Leitung 16 verbindbar, wobei das Ventil über die Leitung 11 ansteuerbar ist. Dadurch kann die Einrichtung zur manuellen Vorgabe 9 und das Ventil 12 über einen niedrigen Druck ansteuern und der Zylinder 5 dennoch über den Hochdruck verstellt werden. Der Druck in der Leitung 11 bestimmt die Kraft auf das Ventil 35 und steht im Gleichgewicht mit der einstellbaren Feder 36. Solange der Druck in der Leitung 11 größer ist als die Federkaft der Feder 36, wird Hochdrucköl von der Leitung 16 über die Leitung 32 zur Leitung 13 geführt. Der Druck im Zylinder auf der Bodenseite 33 bewegt das gemeinsame Element 4.
Durch die Koppelung 37 vom Zylinder 5 zur Feder 36 am Ventil 35 steigt dadurch die Kraft der Feder 36. Die Bewegung des gemeinsamen Elements 4 geht so weit, bis die Federkraft der Feder 36 im Gleichgewicht mit der Kraft aus dem Druck in der Leitung 11 auf das Ventil 35 steht. Somit wird die Maximalposition des Zylinders 5 durch die manuelle Vorgabe mit dem Element 10 bestimmt.

### Fig. 2:

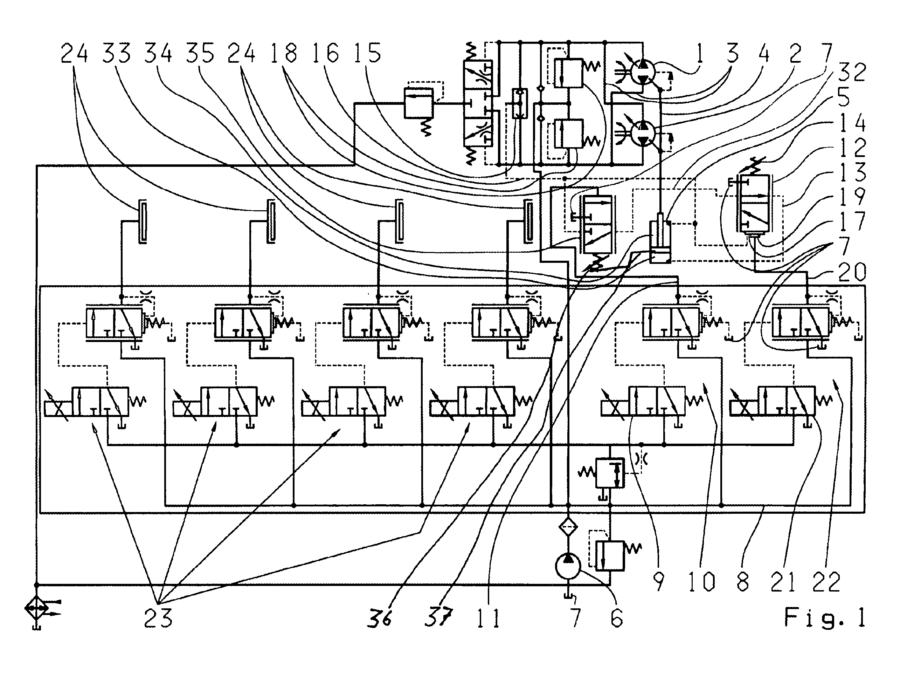

Das hydrostatisch-mechanische Leistungsverzweigungsgetriebe weist eine erste Kolbenmaschine 1 und eine zweite Kolbenmaschine 2 der in Fig. 1 beschriebenen Art auf, welche über ein gemeinsames Bauteil 4 im Hubvolumen verstellbar sind. Der Abtrieb 25 ist über eine Kupplung für Vorwärtsfahrt 26 oder eine Kupplung für Rückwärtsfahrt 27 mit dem Antrieb 28 verbindbar. Die Fahrbereiche lassen sich über eine Kupplung 29 und eine Kupplung 30 schalten. Das Summierungsgetriebe 31 summiert den mechanischen und hydraulischen Leistungszweig.

### Bezugszeichen

- 1: erste Kolbenmaschine
- 2: zweite Kolbenmaschine
- 3: Arbeitsleitung
- 4: gemeinsames Bauteil
- 5: hydraulischer Zylinder
- 6: Druckmittelquelle
- 7: Druckmittelreservoir
- 8: Leitung
- 9: Ventil
- 10: Einrichtung zur manuellen Vorgabe
- 11: Leitung
- 12: Ventil
- 13: Leitung
- 14: Feder
- 15: Wechselventil
- 16: Leitung
- 17: Kreisringfläche
- 18: Druckbegrenzungsventil
- 19: Kreisfläche
- 20: Leitung
- 21: Ventil
- 22: weitere Einrichtung zur manuellen Vorgabe
- 23: Betätigungseinrichtung
- 24: Kupplung
- 25: Abtrieb
- 26: Kupplung für Vorwärtsfahrt
- 27: Kupplung für Rückwärtsfahrt
- 28: Antrieb
- 29: Kupplung
- 30: Kupplung
- 31: Summierungsgetriebe
- 32: Leitung
- 33: Bodenseite
- 34: Stangenseite
- 35: Ventil
- 36: Feder
- 37: Koppelung

## Patentansprüche

1. Verstellvorrichtung des Hubvolumens von hydraulischen Kolbenmaschinen in Schrägachsen-Bauart, wobei eine erste Kolbenmaschine (1) benachbart zu einer zweiten Kolbenmaschine (2) angeordnet ist, wobei die beiden Kolbenmaschinen Arbeitsleitungen (3) aufweisen, über welche die beiden Kolbenmaschinen miteinander hydraulisch verbunden sind, und die Kolbenmaschinen verstellbare Achsen aufweisen, welche über ein gemeinsames Bauteil (4) so verbunden sind, dass durch Bewegen des gemeinsamen Bauteils (4) die verstellbaren Achsen gemeinsam verstellt werden, wobei in einer ersten Stellung des gemeinsamen Bauteils (4) die erste hydraulische Kolbenmaschine (1) auf ein kleines oder kein Hubvolumen und die zweite hydraulische Kolbenmaschine (2) auf ein großes oder maximales Hubvolumen verstellt ist, und in einer zweiten Stellung des gemeinsamen Bauteils (4) die erste hydraulische Kolbenmaschine (1) auf ein großes oder maximales Hubvolumen und die zweite hydraulische Kolbenmaschine (2) auf ein kleines oder minimales Hubvolumen verstellt ist, mit Mittel zum Verstellen (5) des gemeinsamen Bauteils (4), wobei das gemeinsame Bauteil (4) in Abhängigkeit einer Einrichtung zur manuellen Vorgabe (10), je nach Vorgabe, in Richtung erster Stellung oder zweiter Stellung verstellbar ist, und das gemeinsame Bauteil (4), unabhängig von der manuellen Vorgabe (10), in Richtung erster Stellung verstellbar ist, wenn ein zuvor definierter Druck in einer der Arbeitsleitungen (3) überschritten wird, wobei die Mittel zum Verstellen (5) einen hydraulischen Zylinder mit einer Stangenseite (34) und einer Bodenseite (33) aufweisen, welcher zur Betätigung stangenseitig (34) und bodenseitig (33) mit Hochdruck beaufschlagbar ist, wobei die Bodenseite (33) über ein Ventil (35) mit dem Hochdruck verbindbar oder trennbar ist, und die Stangenseite permanent mit dem Hochdruck verbunden ist.

2. Verstellvorrichtung nach Anspruch 1, **dadurch gekennzeichnet, dass** eine weitere Einrichtung zur manuellen Vorgabe (22) vorhanden ist, mittels welcher das gemeinsame Bauteil (4) bei Betätigung der weiteren Einrichtung (22) in Abhängkeit des Drucks in den Arbeitsleitungen (3) und in Abhängigkeit der Betätigung der weiteren manuellen Vorgabe (22) in Richtung erster Stellung verstellbar ist.

3. Verstellvorrichtung nach Anspruch 1, **dadurch gekennzeichnet , dass** das Mittel zur Verstellung des gemeinsamen Bauteils (5) als doppelt wirkender Hydraulikzylinder ausgebildet ist, welcher in seiner Grundstellung bei stangenseitigem Druck das gemeinsame Bauteil (4) in der ersten Stellung hält und bei Druckbeaufschlagung auf der Bodenseite (33) das gemeinsame Bauteil (4) in Richtung zweite Stellung verstellt.

4. Verstellvorrichtung nach Anspruch 3, **dadurch gekennzeichnet , dass** ein Ventil (12) dem Hydraulikzylinder (5) vorgeschaltet angeordnet ist, wobei in einer Grundstellung des Ventils (12) der Hydraulikzylinder (5) bodenseitig über das Ventil (12) in Abhängigkeit der Einrichtung zur manuellen Vorgabe (10) mit einer Druckmittelquelle (16) oder mit einem Druckmittelreservoir (7) verbindbar ist, und das Ventil (12) in seiner weiteren Stellung den Hydraulikzylinder (5) bodenseitig mit einem Druckmittelreservoir (7) verbindet, wodurch das gemeinsame Bauteil (4), unabhängig von der manuellen Vorgabe (10), in Richtung erster Stellung verstellt wird.

5. Verstellvorrichtung nach Anspruch 4, **dadurch gekennzeichnet, dass** zum Verstellen des Ventils (12) aus der Grundstellung in eine weitere Stellung der Druck einer der Arbeitsleitungen (3) auf das Ventil wirkt.

6. Verstellvorrichtung nach Anspruch 5, **dadurch gekennzeichnet, dass** dem Druck der Arbeitsleitungen (3), welcher auf das Ventil (12) wirkt, ein weiterer Druck überlagert wird, welcher von der weiteren Einrichtung zur manuellen Vorgabe (22) einstellbar ist, wodurch beim Überlagern des weiteren Druckes das Ventil (12) bei einem geringeren Druck in den Arbeitsleitungen (3) bereits in die weitere Stellung umgesteuert wird.

7. Verstellvorrichtung nach Anspruch 6, **dadurch gekennzeichnet, dass** das Ventil (12) gegen eine Feder (14) verstellbar ist und eine erste mit Druck beaufschlagbare Fläche (19) und eine zweite mit Druck beaufschlagbare Fläche (17) aufweist, wobei das Ventil (12) von seiner Grundstellung in die weitere Stellung gegen die Kraft der Feder (14) verstellbar ist, wenn Druck auf eine oder beide Flächen (17, 19) wirkt, wobei die erste Fläche (19) über die weitere Einrichtung zur manuellen Vorgabe (22) mit Druckmittel einer Druckmittelquelle (6) verbindbar ist, und die zweite Fläche (17) mit Druckmittel der Arbeitsleitung (3), welche den höheren Druck aufweist, verbindbar ist.

8. Verstellvorrichtung nach Anspruch 7, **dadurch gekennzeichnet, dass** die erste Fläche (19) größer ist als die zweite Fläche (17).

9. Verstellvorrichtung nach Anspruch 1, **dadurch gekennzeichnet , dass** die erste Kolbenmaschine (1) und die zweite Kolbenmaschine (2) in einem hydrostatisch-mechanischen Leistungsverzweigungsgetriebe mit einem hydraulischen und einem mechanischen Zweig angeordnet sind, wobei der hydraulische Zweig mit der ersten Kolbenmaschine (1) und der zweiten Kolbenmaschine (2) in Verbindung steht.

## Claims

1. Device for adjusting the swept volume of hydraulic piston machines of oblique axis construction, wherein a first piston machine (1) is arranged adjacent to a second piston machine (2), wherein the two piston machines have working lines (3) via which the two piston machines are hydraulically connected to one another, and the piston machines have adjustable axles which are connected via a common component (4) such that the adjustable axles are adjusted jointly by a movement of the common component (4), wherein in a first position of the common component (4), the first hydraulic piston machine (1) is adjusted to a small or zero swept volume and the second hydraulic piston machine (2) is adjusted to a large or maximum swept volume, and in a second position of the common component (4), the first hydraulic piston machine (1) is adjusted to a large or maximum swept volume and the second hydraulic piston machine (2) is adjusted to a small or minimal swept volume, having means for adjusting (5) the common component (4), wherein the common component (4) can be adjusted in the direction of the first position or second position as a function of a device for manual presetting (10), according to what is preset, and the common component (4) can be adjusted in the direction of the first position regardless of the manual preset (10) if a predefined pressure is exceeded in one of the working lines (3), wherein the adjusting means (5) have a hydraulic cylinder with a rod side (34) and a base side (33), which hydraulic cylinder, for actuation, can be acted on with high pressure at the rod side (34) and at the base side (33), wherein the base side (33) can be connected to or separated from the high pressure by means of a valve (35), and the rod side is permanently connected to the high pressure.

2. Adjusting device according to Claim 1, **characterized in that** a further device for manual presetting (22) is provided by means of which the common component (4), upon actuation of the further device (22), can be adjusted in the direction of the first position as a function of the pressure in the working lines (3) and as a function of the actuation of the further manual preset (22).

3. Adjusting device according to Claim 1, **characterized in that** the means for adjusting the common component (5) is designed as a double-acting hydraulic cylinder which, in its basic position, if a pressure is acting at the rod side, holds the common component (4) in the first position and, in the event of pressurization on the base side (33), adjusts the common component (4) in the direction of the second position.

4. Adjusting device according to Claim 3, **characterized in that** a valve (12) is arranged upstream of the hydraulic cylinder (5), wherein in a basic position of the valve (12), the hydraulic cylinder (5) can be connected at the base side via the valve (12) to a pressure medium source (16) or to a pressure medium reservoir (7) as a function of the device for manual presetting (10), and the valve (12), in its further position, connects the hydraulic cylinder (5) at the base side to a pressure medium reservoir (7), as a result of which the common component (4) is adjusted in the direction of the first position regardless of the manual preset (10).

5. Adjusting device according to Claim 4, **characterized in that**, for the adjustment of the valve (12) from the basic position into a further position, the pressure of one of the working lines (3) acts on the valve.

6. Adjusting device according to Claim 5, **characterized in that** the pressure of the working lines (3) which acts on the valve (12) has superposed on it a further pressure which can be set by the further device for manual presetting (22), as a result of which the valve (12) is already reversed into the further position upon superposition of the further pressure if a relatively low pressure is acting in the working lines (3).

7. Adjusting device according to Claim 6, **characterized in that** the valve (12) can be adjusted counter to a spring (14) and has a first surface (19) which can be acted on with pressure and a second surface (17) which can be acted on with pressure, wherein the valve (12) can be adjusted from its basic position into the further position counter to the force of the spring (14) when pressure acts on one or both surfaces (17, 19), wherein the first surface (19) can be connected via the further device for manual presetting (22) to pressure medium of a pressure medium source (6), and the second surface (17) can be connected to pressure medium of the working line (3) which has the higher pressure.

8. Adjusting device according to Claim 7, **characterized in that** the first surface (19) is larger than the second surface (17).

9. Adjusting device according to Claim 1, **characterized in that** the first piston machine (1) and the second piston machine (2) are arranged in a hydrostatic-mechanical power split transmission having a hydraulic branch and having a mechanical branch, wherein the hydraulic branch is connected to the first piston machine (1) and to the second piston machine (2) .

## Revendications

1. Dispositif de réglage de la cylindrée de machines à piston hydrauliques de construction à axes obliques, dans lequel une première machine à piston (1) est disposée à côté d'une deuxième machine à piston (2), les deux machines à piston présentant des conduites de travail (3), par le biais desquelles les deux machines à piston sont reliées hydrauliquement l'une à l'autre, et les machines à piston présentant des axes réglables, qui sont reliés par le biais d'un composant commun (4), de telle sorte que par déplacement du composant commun (4), les axes réglables soient réglés ensemble, dans une première position du composant commun (4), la première machine à piston hydraulique (1) étant réglée à une petite cylindrée, ou à une cylindrée nulle, et la deuxième machine à piston hydraulique (2) étant réglée à une grosse cylindrée ou à une cylindrée maximale, et dans une deuxième position du composant commun (4), la première machine à piston hydraulique (1) étant réglée à une grosse cylindrée ou à une cylindrée maximale et la deuxième machine à piston hydraulique (2) étant réglée à une petite cylindrée ou à une cylindrée minimale, avec des moyens pour le réglage (5) du composant commun (4), le composant commun (4) pouvant être réglé en fonction d'une commande préalable manuelle (10), selon la commande préalable, dans la direction d'une première position ou d'une deuxième position, et le composant commun (4), indépendamment de la commande préalable manuelle (10), pouvant être réglé dans la direction de la première position, lorsqu'une pression définie auparavant dans l'une des conduites de travail (3) est dépassée, les moyens de réglage (5) présentant un cylindre hydraulique avec un côté tige (34) et un côté fond (33), qui peut être sollicité pour l'actionnement du côté tige (34) et du côté fond (33) avec une haute pression, le côté fond (33) pouvant être connecté à la haute pression par une soupape (35), ou pouvant être déconnecté de celle-ci, et le côté tige étant connecté de manière permanente à la haute pression.

2. Dispositif de réglage selon la revendication 1, **caractérisé en ce qu'**un dispositif supplémentaire de commande préalable manuelle (22) est prévu, lequel peut régler le composant commun (4) lors de l'actionnement du dispositif supplémentaire (22) en fonction de la pression dans les conduites de travail (3) et en fonction de l'actionnement de l'autre commande préalable manuelle (22) dans la direction de la première position.

3. Dispositif de réglage selon la revendication 1, **caractérisé en ce que** le moyen de réglage du composant commun (4) est réalisé sous forme de cylindre hydraulique à double action, qui, dans sa position de base avec pression du côté de la tige, maintient le composant commun (4) dans la première position, et lors de la sollicitation en pression du côté du fond (33), déplace le composant commun (4) dans la direction de la deuxième position.

4. Dispositif de réglage selon la revendication 3, **caractérisé en ce qu'**une soupape (12) est disposée en amont du cylindre hydraulique (5), et dans une position de base de la soupape (12), le cylindre hydraulique (5) pouvant être connecté du côté du fond par le biais de la soupape (12), en fonction du dispositif de commande préalable manuelle (10), à une source de fluide sous pression (16), ou à un réservoir de fluide sous pression (7), et la soupape (12), dans son autre position, reliant le cylindre hydraulique (5) du côté du fond à un réservoir de fluide sous pression (7), le composant commun (4) étant de ce fait réglé dans la direction de la première position, indépendamment de la commande préalable manuelle (10).

5. Dispositif de réglage selon la revendication 4, **caractérisé en ce que** pour le réglage de la soupape (12) de la position de base dans une autre position, la pression de l'une des conduites de travail (3) agit sur la soupape.

6. Dispositif de réglage selon la revendication 5, **caractérisé en ce que** l'on ajoute à la pression des conduites de travail (3), qui agit sur la soupape (12), une pression supplémentaire qui peut être ajustée par le dispositif supplémentaire de commande préalable manuelle (22), de sorte que lors de l'ajout de la pression supplémentaire, la soupape (12) soit déjà commandée à l'inversion dans l'autre position en cas de plus faible pression dans les conduites de travail (3).

7. Dispositif de réglage selon la revendication 6, **caractérisé en ce que** la soupape (12) peut être réglée à l'encontre d'un ressort (14) et présente une première surface (19) pouvant être sollicitée en pression et une deuxième surface (17) pouvant être sollicitée en pression, la soupape (12) pouvant être déplacée de sa position de base dans l'autre position à l'encontre de la force du ressort (14), lorsque la pression agit sur l'une ou sur les deux surfaces (17, 19), la première surface (19) pouvant être connectée par le biais du dispositif supplémentaire de commande préalable manuelle (22) à du fluide sous pression d'une source de fluide sous pression (6), et la deuxième surface (17) pouvant être connectée à du fluide sous pression de la conduite de travail (3) qui présente la plus haute pression.

8. Dispositif de réglage selon la revendication 7, **caractérisé en ce que** la première surface (19) est plus grande que la deuxième surface (17).

9. Dispositif de réglage selon la revendication 1, **caractérisé en ce que** la première machine à piston (1) et la deuxième machine à piston (2) sont disposées dans une transmission à répartition de puissance hydrostatique-mécanique, avec une partie hydraulique et une partie mécanique, la partie hydraulique étant en liaison avec la première machine à piston (1) et la deuxième machine à piston (2).
